(19) Europäisches Patentamt
European Patent Office
Office européen des brevets

(11) **EP 2 842 824 B1**

(12) **EUROPEAN PATENT SPECIFICATION**

(45) Date of publication and mention
of the grant of the patent:
**03.08.2016 Bulletin 2016/31**

(51) Int Cl.:
*B60W 20/00* (2016.01)     *B60W 30/18* (2012.01)
*B60W 50/14* (2012.01)     *B60K 6/48* (2007.10)

(21) Application number: **14182794.9**

(22) Date of filing: **29.08.2014**

(54) **METHOD TO CONTROL A HYBRID VEHICLE SO AS TO PREVENT THE HYBRID VEHICLE FROM MOVING BACKWARD OR FORWARD WHEN IT STOPS ON A SLOPING ROAD SURFACE**

VERFAHREN ZUR STEUERUNG EINES HYBRIDFAHRZEUGS ZUR VERHINDERUNG DER RÜCKWÄRTS- ODER VORWÄRTSBEWEGUNG, WENN ES AUF EINER GENEIGTEN STRAßENOBERFLÄCHE HÄLT

PROCÉDÉ POUR COMMANDER UN VÉHICULE HYBRIDE AFIN D'EMPÊCHER QUE CELUI-CI NE SE DÉPLACE VERS L'AVANT OU VERS L'ARRIÈRE LORSQU'IL S'ARRÊTE SUR UNE SURFACE DE ROUTE EN PENTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2013 IT BO20130469**

(43) Date of publication of application:
**04.03.2015 Bulletin 2015/10**

(73) Proprietor: **Magneti Marelli S.p.A.**
**Corbetta (MI) (IT)**

(72) Inventors:
• **Benassi, Daniele**
**40138 BOLOGNA (IT)**
• **Leoni, Andrea**
**06126 PERUGIA (IT)**
• **Monacelli, Francesco**
**06023 GUALDO TADINO (IT)**
• **Zanotti, Massimo**
**40040 VADO (IT)**

(74) Representative: **Maccagnan, Matteo et al**
**Studio Torta S.p.A.**
**Via Viotti, 9**
**10121 Torino (IT)**

(56) References cited:
**DE-A1-102010 032 436**    **KR-A- 20100 091 404**
**US-A1- 2003 085 576**    **US-A1- 2009 062 061**
**US-A1- 2009 230 908**

## Description

TECHNICAL FIELD

The present invention relates to a method to control a hybrid vehicle.

PRIOR ART

Hybrid vehicles are increasingly common, comprising an internal combustion engine, which transmits torque to the drive wheels by means of a servo-assisted transmission provided with a servo-assisted mechanical gear box, and at least one electrical machine which is connected electrically to an electric storage system and is connected mechanically to the drive wheels.

Typically, the electrical machine is of the reversible type, i.e. it may operate both as motor by absorbing electric energy and generating mechanical work, and as generator by absorbing mechanical work and generating electric energy, and is driven by an electric actuation connected to the electric storage system adapted to store electric energy. Typically, the electrical machine is keyed to a secondary shaft of the servo-assisted mechanical gear box and is driven so as to replace the internal combustion engine for example, when the servo-assisted clutch stays open; in other words, when the servo-assisted clutch is open, the electrical machine absorbs energy from the storage system to generate a torque which is equivalent to the torque generated by the internal combustion engine. However, in this configuration the electric motor cannot perform certain functions (typically it cannot operate as a starter for the internal combustion engine), while it is under unfavourable conditions to carry out other functions.

For this reason, a servo-assisted transmission was proposed comprising a connection device which is adapted to connect a shaft of the reversible electrical machine to a main shaft of the servo-assisted mechanical gear box, or to connect the shaft of the reversible electrical machine to the secondary shaft of the servo-assisted mechanical gear box, or to keep idle the shaft of the reversible electrical machine (i.e. not connected to the main shaft or to the secondary shaft).

In this configuration, when the shaft of the reversible electrical machine is connected to the main shaft of the servo-assisted mechanical gear box, the reversible electrical machine can be used as a starter to start the internal combustion engine.

Additionally, certain hybrid vehicles are also provided with an electronic system, better known as hill holder, which is usually managed by the control unit that controls the system for controlling the stability of the hybrid vehicle (also known as ESC, Electronic Stability Control). The electronic system better known as *hill holder* is suited to assist the driver of the vehicle during uphill starts and is particularly useful when a restart is required on an uphill road surface and the distance from the vehicle behind is quite reduced, because it allows avoiding even minimal backward movements and therefore reduces the risk of hitting the vehicle following closely behind.

However, the anti-backward function performed by the hill holder electronic system involves increasing the components and, subsequently, the overall costs of the system for controlling the stability of the hybrid vehicle (also known as ESC, Electronic Stability Control).

For example, document US-A1-2009/062061, on which the preamble of claim 1 is based, discloses a hybrid vehicle wherein the reversible electrical machine performs the function of hill holder, i.e. of obtaining an anti-forward and anti-backward movement device of the hybrid vehicle without additional components. Such hybrid vehicle presents some drawbacks; in particular the driver is not aware if his intervention is needed when the reversible electrical machine cannot perform the function of hill holder.

DESCRIPTION OF THE INVENTION

It is the object of the present invention to provide a method to control a hybrid vehicle, which does not have the drawbacks of the state of the art and is easy and affordable to implement.

According to the present invention, a method to control hybrid vehicle is provided according to that claimed in the appended claims.

BRIEF DESCRIPTION OF THE DRAWINGS

The present invention will now be described with reference to the accompanying drawing, which illustrates a non-limiting embodiment thereof, in which the accompanying drawing is a diagrammatic view of a servo-assisted transmission for a hybrid vehicle which implements the control method provided in accordance with the present invention.

PREFERRED EMBODIMENTS OF THE INVENTION

Number 1 in the accompanying figure indicates a servo-assisted transmission as a whole for a hybrid vehicle driven by an internal combustion engine 2, which is provided with a drive shaft 3 that rotates at an angular speed $\omega_m$. In particular, a vehicle with hybrid drive and parallel architecture is involved.

The servo-assisted transmission 1 comprises a servo-assisted mechanical gear box 4, which is provided with a main shaft 5 that rotates at an angular speed $\omega_1$ and is connectable to the drive shaft 3 by means of a servo-assisted clutch 6, and a secondary shaft 7 that rotates at angular speed $\omega_2$ and is connected to a differential 8 that transmits motion to the drive wheels by means of two axles shafts 9.

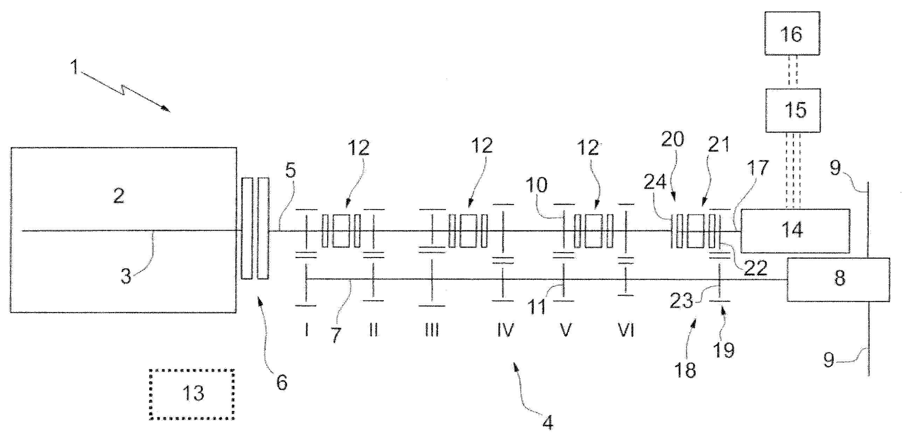

The servo-assisted mechanical gear box 4 shown in figure 1 has six forward gears indicated with Roman numerals (first gear I, second gear II, third gear III, fourth gear IV, fifth gear V, and sixth gear VI). The main shaft 5 and the secondary shaft 7 are mechanically coupled to each other by means of a plurality of pairs of gears, each of which defines a respective gear and comprises a main gear 10 assembled on the main shaft 5 and a secondary gear 11 assembled on the secondary shaft 7.

Each main gear 10 is assembled idle on the main shaft 5 and always engages with the respective secondary gear 11; each secondary gear 11 is instead keyed to the secondary shaft 7 to rotate integrally with the secondary shaft 7 itself. Moreover, the servo-assisted mechanical gear box 4 comprises three synchronizers 12, each of which is coaxially assembled to the main shaft 5, is arranged between two main gears 10, and is adapted to be actuated to alternatively engage the two main gears 10 to the main shaft 5 (i.e. to alternatively make the two main gears 10 angularly integral to the main shaft 5). In other words, each synchronizer 12 may be moved in one direction to engage a main gear 10 to the main shaft 5, or may be moved in the other direction to engage the other main gear 10 to the main shaft 5.

The servo-assisted mechanical gear box 4 is operated by a hydraulic servo-control for driving the synchronizers 12 so as to engage and disengage the gears; the servo-assisted clutch 6 is also operated by a hydraulic servo-control for connecting and disconnecting the drive shaft 3 to the main shaft 5. The servo-assisted transmission 1 comprises a control unit 13 (illustrated diagrammatically), which drives the hydraulic servo-controls of the servo-assisted mechanical gear box 4 and of the servo-assisted clutch 6.

According to a different embodiment not illustrated and perfectly equivalent to the embodiment described above, the main gears 10 are keyed to the main shaft 5, the secondary gears 11 are assembled idle on the secondary shaft 7, and the synchronizers 12 are assembled on the secondary shaft 7 to engage the secondary gears 11 to the secondary shaft 7.

Moreover, the servo-assisted transmission 1 comprises a reversible electrical machine 14 (i.e. which may operate both as motor by absorbing electric energy and generating mechanical work, and as generator by absorbing mechanical work and generating electric energy) driven by an electric operation 15 connected to at least one battery 16 adapted to store electric energy.

The reversible electrical machine 14 comprises a shaft 17, which is integral to a rotor of the reversible electrical machine 14, is normally idle (i.e. it is not mechanically connected permanently to the main shaft 5 nor to the secondary shaft 7), and is mechanically connectable to the main shaft 5.

The servo-assisted transmission 1 comprises a connection device 18 adapted to connect shaft 17 of the reversible electrical machine 14 to the main shaft 5 of the servo-assisted mechanical gear box 4, or to connect shaft 17 of the reversible electrical machine 14 to the secondary shaft 7 of the servo-assisted mechanical gear box 4, or to keep idle shaft 17 of the reversible electrical machine 14 (i.e. not connected to the main shaft 5 nor to the secondary shaft 7).

According to the preferred embodiment shown in the accompanying drawings, the connection device 18 comprises a gear drive 19 interposed between shaft 17 of the reversible electrical machine 14 and the secondary shaft 7 of the servo-assisted mechanical gear box 4, a direct drive transmission 20 interposed between shaft 17 of the reversible electrical machine 14 and the main shaft 5, and a synchronizer 21 adapted to engage alternatively the gear drive 19 or the direct drive transmission 20.

The gear drive 19 preferably has a non-unitary transmission ratio and comprises a gear 22 assembled idle on shaft 17 of the reversible electrical machine 14 and a gear 23 which is keyed to the secondary shaft 7 and engages completely with gear 22; synchronizer 21 is adapted to engage gear 22 to shaft 17 of the reversible electrical machine 14 to connect shaft 17 of the reversible electrical machine 14 to the secondary shaft 7. The value of the non-unitary transmission ratio of the gear drive 19 is such as to optimize the rotation and torque speed values of the reversible electrical machine 14 with respect to the rotation and torque speed transmitted by the secondary shaft 7; normally the gear drive 19 provides reducing the number of revolutions, i.e. the reversible electrical machine 14 runs slower than the secondary shaft 7.

The direct drive transmission 20 has a unitary transmission ratio and comprises a connection element 24 keyed to the main shaft 5; synchronizer 21 is adapted to engage the connection element 24 to shaft 17 of the reversible electrical machine 14 to connect shaft 17 of the reversible electrical machine 14 to the main shaft 5.

According to a different embodiment not illustrated, the direct drive transmission 20 is replaced by a further gear drive, which is interposed between shaft 17 of the reversible electrical machine 14 and the main shaft 5, has a non-unitary transmission ratio and is completely similar to the gear drive 19. In this case also, the value of the non-unitary transmission ratio of the further gear drive is such as to optimize the rotation and torque speed values of the reversible electrical machine 14 with respect to the rotation and torque speed transmitted by the main shaft 5; normally the further gear drive provides reducing the number of revolutions, i.e. the reversible electrical machine 14 runs slower than the main shaft 5.

In use, when a gear is not being shifted and the vehicle is running (i.e. the internal combustion engine 2 is on and the servo-assisted clutch 6 is closed), shaft 17 of the reversible electrical machine 14 is normally connected to the main shaft 5 and the reversible electrical machine 14 operates as an electric energy generator to deliver the electric energy requested by the electric devices of the vehicle. If the vehicle slows down, the reversible electrical machine 14 may maximize (compatibly with the charge state of battery 16 and with the dynamics of the vehicle) the absorption of mechanical energy to obtain a regenerative braking of the vehicle.

In use, the reversible electrical machine 14 is suited to work as a *"hill holder"* device. That is, the reversible electrical machine 14 is suited to work as an anti-backward and/or anti-forward movement device of the hybrid vehicle.

Described below is the control method implemented by the control unit 13 if there is a need for action of the anti-backward and/or anti-forward movement device of the hybrid vehicle.

According to a first variant, the hybrid vehicle is provided with a sloping sensor (not illustrated) which is adapted to detect when the hybrid vehicle stands on a sloping road surface (which could be both uphill or downhill).

According to a second variant, the hybrid vehicle is provided with a motor rotation sensor (not illustrated) which may be used alternatively to the sloping sensor (not illustrated) or combined with the sloping sensor (not illustrated) and is suited to provide a rather accurate indication of the slope of the road surface on which the hybrid vehicle stands.

The control unit 13 is suited to detect a request for action of the anti-backward and/or anti-forward movement device of the hybrid vehicle typically by means of the occurrence of the following conditions:

- the slope and/or movement sensor (not illustrated) of the hybrid vehicle detects that the hybrid vehicle stands on a sloping road surface (which could be both uphill or downhill); and
- the driver acts upon the brake pedal.

It is worth noting that the two conditions listed above are to be verified all simultaneously so that the control unit 13 detects a request for action of the anti-backward and/or anti-forward movement device of the hybrid vehicle.

In other words, when the control unit 13 detects that the driver has acted upon the brake pedal and, at the same time, the slope and/or movement sensor (not illustrated) of the hybrid vehicle has transmitted to the control unit 13 the signal that the hybrid vehicle stands still on a sloping road surface (which could be both uphill or downhill), then the control unit 13 enables the action of the anti-backward and/or anti-forward movement device of the hybrid vehicle.

When the control unit 13 enables the action of the anti-backward and/or anti-forward movement device of the hybrid vehicle, the control unit 13 is suited to determine an objective drive torque $C_{obj}$ which is variable as a function of the slope (uphill or downhill) of the road surface on which the hybrid vehicle stands still, of the slope degree of the road surface and which is such as to guarantee a speed of the hybrid vehicle equal to zero.

If the hybrid vehicle stands still on a downhill sloping road surface, there is a need to provide an objective braking torque $C_{obj}$ to prevent the hybrid vehicle from moving forward. If instead, the hybrid vehicle stands still on an uphill sloping road surface, there is a need to provide an objective drive torque $C_{obj}$ to prevent the hybrid vehicle from moving backward.

In particular, the control unit 13 is adapted to determine the objective drive torque $C_{obj}$ to be delivered to the drive wheels starting from the instant in which the control unit 13 enables the action of the anti-backward and/or anti-forward movement device of the hybrid vehicle.

The objective drive torque must be such as to fulfil the request of the driver who acts upon the brake pedal, i.e. keeping still the hybrid vehicle which is on the sloping road surface (both uphill, downhill).

Therefore, the control unit 13 is suited to control the reversible electrical machine 14 to work as an electric energy generator to deliver the electric energy required, according to the following formula:

$$E_{tot} = \Delta E(C_{obj}) + E_i \quad [1]$$

Wherein:

$E_i$: electric energy delivered by the reversible electrical machine 14 for the operation of the electric devices of the hybrid vehicle in the instant in which the control unit 13 enables action of the anti-backward and/or anti-forward movement device of the hybrid vehicle;

$\Delta E(C_{obj})$: electric energy delivered by the reversible electrical machine 14 to guarantee the objective drive torque $C_{obj}$ to the drive wheels in the instant in which the control unit 13 enables action of the anti-backward and/or anti-forward movement device of the hybrid vehicle; and

$E_{tot}$ : total electric energy requested by the reversible electrical machine 14 in the instant in which the control unit 13 enables action of the anti-backward and/or anti-forward movement device of the hybrid vehicle.

Clearly, the control unit 13 is suited to verify whether the charge state of battery 16 is such as to guarantee the delivery of the objective drive torque $C_{obj}$ to the drive wheels in the instant in which the control unit 13 itself enables the action of the anti-backward and/or anti-forward movement device of the hybrid vehicle.

In other words, the control unit 13 is suited to verify whether the charge state of battery 16 is sufficient to deliver the total electric energy $E_{tot}$ requested to the reversible electrical machine 14 in the instant in which the control unit 13 enables the action of the anti-backward and/or anti-forward movement device of the hybrid vehicle, i.e. is such as to guarantee both the delivery of the electric energy $\Delta E(C_{obj})$ to guarantee the objective drive torque $C_{obj}$ to the drive wheels in the instant in which the control unit 13 enables action of the anti-backward and/or anti-forward movement device of the hybrid vehicle and to meet the requests from the electric devices of the hybrid vehicle.

If the results of this check are negative (i.e. if the charge state of battery 16 is not sufficient to deliver the total electric energy $E_{tot}$ requested to the reversible electrical machine 14 in the instant in which the control unit 13 itself enables the action of the anti-backward and/or anti-forward movement device of the hybrid vehicle, i.e. such as to guarantee both the supply of the electric energy $\Delta E(C_{obj})$ to guarantee the objective drive torque $C_{obj}$ to the drive wheels in the instant in which the control unit 13 enables the action of the anti-backward and/or anti-forward movement device of the hybrid vehicle and to meet the requests from the electric devices of the hybrid vehicle), then the control unit 13 is suited to control the reversible electrical machine 14 so that it operates as an electric energy generator for only delivering the electric energy required to meet the requests from the electric devices of the hybrid vehicle.

In other words, if the results of the check are negative (i.e. if the charge state of battery 16 is not sufficient to deliver the total electric energy $E_{tot}$ requested to the reversible electrical machine 14 and such as to guarantee both the delivery of the electric energy $\Delta E(C_{obj})$ to guarantee the objective drive torque $C_{obj}$ to the drive wheels in the instant in which the control unit 13 enables the action of the anti-backward and/or anti-forward movement device of the hybrid vehicle and to meet the requests from the electric devices of the hybrid vehicle), then the objective drive torque $C_{obj}$ is not transmitted to the drive wheels. In other words, in this case, the control unit 13 is forced to disable the action of the anti-backward and/or anti-forward movement device of the hybrid vehicle and to necessarily signal (typically by means of a warning light or other indicator device that lights up on the dashboard of the hybrid vehicle) to the driver that the anti-backward and/or anti-forward movement device of the hybrid vehicle is not operating and, consequently, cannot provide the driver with the assistance required for example, in case of an uphill start.

According to one variant, if the hybrid vehicle is also provided with an electronic *hill holder* system (of known type and not described in detail) to avoid the backward and/or forward movement of the hybrid vehicle if the results of the check are negative (i.e. if the charge state of battery 16 is not sufficient to deliver the total electric energy $E_{tot}$ requested to the reversible electrical machine 14 and such as to guarantee both the delivery of the electric energy $\Delta E(C_{obj})$ to guarantee the objective drive torque $C_{obj}$ to the drive wheels in the instant in which the control unit 13 enables action of the anti-backward and/or anti-forward movement device of the hybrid vehicle and to meet the requests from the electric devices of the hybrid vehicle), then the control unit 13 is suited to control the activation of the electronic hill holder system (of known type and not described in detail) to avoid the backward and/or forward movement of the hybrid vehicle which stands still on a sloping road surface (both uphill and downhill).

If instead the results of this check are positive (i.e. if the charge state of battery 16 is sufficient to deliver the total electric energy $E_{tot}$ requested to the reversible electrical machine 14 and such as to guarantee both the supply of the electric energy $\Delta E(C_{obj})$ to guarantee the objective drive torque $C_{obj}$ to the drive wheels in the instant in which the control unit 13 enables the action of the anti-backward and/or anti-forward movement device of the hybrid vehicle and to meet the requests from the electric devices of the hybrid vehicle), then the control unit 13 is suited to control the reversible electrical machine 14 so that it operates as an electric energy generator for delivering the total electric energy $E_{tot}$.

In other words again, if the results of this check are positive (i.e. if the charge state of battery 16 is sufficient to deliver the total electric energy $E_{tot}$ requested to the reversible electrical machine 14), the objective drive torque $C_{obj}$ to the drive wheels is delivered by the reversible electrical machine 14 which operates in the same way as a traditional electronic *hill holder.*

It is worth noting that the activation of the reversible electrical machine 14 is almost immediate and it is possible to deliver the objective drive torque $C_{obj}$ to the drive wheels to fulfil the requests of the driver who acts upon the brake pedal with a substantially negligible transient.

The control unit 13 is further suited to detect the intention on the part of the driver to move forward when the driver no longer acts upon the brake pedal.

The hybrid vehicle is kept still on the sloping road surface (both uphill, downhill), due to the objective drive torque $C_{obj}$.

The control unit 13 is suited to detect a request for an increase in torque C to be delivered to the drive wheels typically by means of a decisive act on the part of the driver, who acts upon the accelerator pedal to manifest the intention to move forward with the hybrid vehicle.

In particular, the control unit 13 is suited to determine an objective torque $C_{m\_obj}$ which is such as to fulfil the request on the part of the driver who acts upon the accelerator pedal. Clearly, such an objective torque $C_{m\_obj}$ (which allows the hybrid vehicle to reach a speed greater than zero) is greater than the objective drive torque $C_{obj}$ (which allows the hybrid vehicle to maintain a null speed).

Then, the control unit 13 is adapted to determine the additional torque $\Delta C_m$ to be delivered to the drive wheels starting from the instant in which a request is detected for an increase in torque C on the part of the driver, who acts upon the accelerator pedal to meet the request, by means of the following formula:

$$\Delta C_m = C_{m\_obj} - C_{obj} \quad [2]$$

Wherein:

ΔC$_m$ : additional torque to be delivered to the drive wheels starting from the instant in which a request for an increase in torque C on the part of the driver, who acts upon the accelerator pedal, is detected;

C$_{m\_obj}$: objective torque such as to fulfil the request of the driver, who acts upon the accelerator pedal; and

C$_{obj}$: objective drive torque delivered by the electrical machine 14 to the drive wheels in the instant in which the request for an increase in torque C on the part of the driver, who acts upon the accelerator pedal, is detected by the control unit 13.

The additional torque ΔC$_m$ to be delivered to fulfil the request by the driver, who acts upon the accelerator pedal, calculated through the [2] is delivered by the reversible electrical machine 14 to the drive wheels.

Therefore, the control unit 13 is suited to control the reversible electrical machine 14 to work as a torque generator to deliver the electric energy required, according to the following formula:

$$E \ = \ \Delta E\,(C_m) \ _+ \ E_{tot} \qquad [3]$$

Wherein:

E$_{tot}$: electric energy calculated by means of the formula [1] and delivered by the reversible electrical machine 14 for the operation of the electric devices of the hybrid vehicle and for the operation as anti-backward/anti-forward device (i.e. to generate the objective drive torque C$_{obj}$ that allows the hybrid vehicle to maintain a null speed) in the instant in which a request is detected for an increase in torque C on the part of the driver, who acts upon the accelerator pedal;

ΔE(ΔC$_m$) : additional electric energy delivered by the reversible electrical machine 14 to guarantee the additional torque ΔC$_m$ to the drive wheels in the instant in which a request is detected for an increase in torque C on the part of the driver, who acts upon the accelerator pedal; and

E : total electric energy requested to the reversible electrical machine 14 in the instant in which a request is detected for an increase in torque C on the part of the driver, who acts upon the accelerator pedal.

Clearly, in this case too, the control unit 13 is suited to check that the charge state of battery 16 is such as to guarantee the delivery of additional electric energy ΔE(ΔC$_m$) to guarantee the additional torque ΔC$_m$ to the drive wheels in the instant in which a request is detected for an increase in torque C on the part of the driver, who acts upon the accelerator pedal.

If the results of this check are negative (i.e. if the charge state of battery 16 is not sufficient to deliver the total electric energy requested to the reversible electrical machine 14 in the instant in which a request is detected for an increase in torque C on the part of the driver), then the control unit 13 is suited to control the reversible electrical machine 14 so that it works as an electric energy generator to deliver only the electric energy calculated by means of the formula [1] required for the operation of the electric devices of the hybrid vehicle and for the operation as anti-backward/anti-forward device (i.e. to generate the objective drive torque C$_{obj}$ that allows the hybrid vehicle to maintain a null speed) in the instant in which a request is detected for an increase in torque C on the part of the driver, who acts upon the accelerator pedal.

In other words, if the results of the check are negative, the additional torque ΔC$_m$ to the drive wheels is delivered by the internal combustion engine 2.

If instead the results of the check are positive, then the control unit 13 is suited to control the reversible electrical machine 14 to work as an electric energy generator to deliver the total electric energy E. In other words again, if the results of the check are positive, the additional torque ΔC$_m$ to the drive wheels is also delivered by the reversible electrical machine 14.

It is worth noting that, in this case also, the activation of the reversible electrical machine 14 is almost immediate and it is possible to deliver the additional torque ΔC$_m$ required to fulfil the requests of the driver who acts upon the brake pedal with a substantially negligible transient.

According to one variant, in a preliminary setting and fine-tuning step, a time limit value Δt is determined, preferably in the order of a few seconds.

The control unit 13 is suited to control the interruption of the generation of the objective drive torque C$_{obj}$ to the drive wheels if, a time interval having passed that is longer than the time limit value Δt starting from the instant in which the control unit 13 detects that the driver no longer acts upon the brake pedal, the control unit 13 does not detect a request for an increase in torque C to be delivered to the drive wheels by means of a decisive act on the part of the driver, who acts upon the accelerator pedal to manifest the intention to move forward with the hybrid vehicle. In other words, a timer is started when the control unit 13 detects that the driver no longer acts upon the brake pedal. If, at the end of a time interval that is longer than the time limit value Δt, the control unit 13 does not detect a request for an increase in torque C to be delivered to the drive wheels by means of a decisive act on the part of the driver, who acts upon the accelerator pedal to manifest the intention to move forward with the hybrid vehicle, the control unit 13 in any event interrupts the generation of the objective drive torque C$_{obj}$ to the drive wheels which keeps still the hybrid vehicle.

According to a different embodiment not illustrated, the connection device 18 comprises a pair of clutches, which replace synchronizer 21 and are interposed between shaft 17 of the reversible electrical machine 14 and the main shaft 5 and the secondary shaft 7, respectively.

The above disclosure may also be advantageously applied in a hybrid vehicle with architecture in series or in a hybrid vehicle with combined series/parallel architecture.

The method to control a hybrid vehicle described hereto has the advantage of allowing the reversible electrical machine 14 to perform the function of hill holder, i.e. of obtaining an anti-forward and anti-backward movement device of the hybrid vehicle without additional components, but simply by means of a control of the reversible electrical machine 14.

**Claims**

1. A method to control a hybrid vehicle provided with an internal combustion engine (2), a servo-assisted transmission (1) and a reversible electrical machine (14) suited to generate a torque (C) to be transmitted to the drive wheels, wherein the reversible electrical machine (14) is connected to a storage system (16) adapted to store electric energy;
   the method comprises the steps of:

   recognizing the occurrence of the condition in which the hybrid vehicle stands still on a sloping road surface;
   calculating an objective drive torque (Cobj) to be delivered to the drive wheels so as to keep the hybrid vehicle still on the sloping road surface;
   detecting the charge state of the storage system (16); and
   controlling the reversible electrical machine (14) so as to deliver to the drive wheels the objective drive torque (Cobj) needed to keep the hybrid vehicle still on the sloping road surface only in case the charge state of the storage system (16) is sufficient to deliver the objective drive torque (Cobj) needed to keep the hybrid vehicle still on the sloping road surface;
   the method is **characterized in that** it further comprises the step of signalling to the driver the condition in which the charge state of the storage system (16) is not sufficient to deliver the objective drive torque (Cobj) needed to keep the hybrid vehicle still on the sloping road surface so that the driver may intervene to avoid undesired moving backward or forward of the hybrid vehicle on the sloping road surface.

2. A method according to claim 1, wherein the hybrid vehicle is provided with a hybrid vehicle slope and/or movement sensor, which is suited to detect whether the hybrid vehicle stands on a sloping road surface, and wherein the step of recognizing the occurrence of the condition in which the hybrid vehicle stands still on a sloping road surface involves recognizing the simultaneous occurrence of the following conditions:

   - the hybrid vehicle slope and/or movement sensor detects that the hybrid vehicle stands on a sloping road surface; and
   - the driver acts upon the brake pedal.

3. A method according to any of the previous claims, wherein the step of controlling the reversible electrical machine (14) so as to deliver to the drive wheels the objective drive torque (Cobj) needed to keep the hybrid vehicle still on the sloping road surface involves calculating the electric energy needed to allow the reversible electrical machine (14) to work as an electric energy generator according to the following formula:

$$E_{tot} = \Delta E(C_{obj}) + E_i \quad [1]$$

   $E_i$: electric energy delivered by the reversible electrical machine (14) for the operation of the electric devices of the hybrid vehicle in the instant in which the hybrid vehicle stands still on a sloping road surface;
   $\Delta E(C_{obj})$: electric energy delivered by the reversible electrical machine (14) to guarantee the objective drive torque ($C_{obj}$) to the drive wheels in the instant in which the hybrid vehicle stands still on a sloping road surface; and
   $E_{tot}$ : total electric energy requested to the reversible electrical machine (14) in the instant in which the hybrid vehicle stands still on a sloping road surface.

4. A control method according to any of the previous claims and comprising the further step of recognizing the intention of the driver to move forward with the hybrid vehicle, when the driver does not act upon the brake pedal any longer and requests and increase in the torque (C) to be delivered to the drive wheels by acting upon the accelerator pedal.

5. A method according to claim 3 and 4 and comprising the further step of calculating the electric energy needed to allow the reversible electrical machine (14) to work as an electric energy generator according to the following formula:

$$E = \Delta E(C_m) + E_{tot} \quad [3]$$

$E_{tot}$: total electric energy requested to the reversible electrical machine (14) in the instant in which the hybrid vehicle stands still on a sloping road surface;

$\Delta E(\Delta C_m)$ : additional electric energy delivered by the reversible electrical machine (14) to guarantee an additional torque ($\Delta C_m$) to the drive wheels in the instant in which a request for an increase in the torque (C) on the part of the driver, who acts upon the accelerator pedal, is detected; and

E : total electric energy requested to the reversible electrical machine (14) in the instant in which a request for an increase in the torque (C) on the part of the driver, who acts upon the accelerator pedal, is detected.

6. A method according to claim 5, in which the additional torque ($\Delta C_m$) to be delivered to the drive wheels in the instant in which a request for an increase in the torque (C) on the part of the driver, who acts upon the accelerator pedal, is detected is calculated through the following formula:

$$\Delta C_m = C_{m\_obj} - C_{obj} \quad [2]$$

$\Delta C_m$ : additional torque to be delivered to the drive wheels starting from the instant in which a request for an increase in the torque (C) on the part of the driver, who acts upon the accelerator pedal, is detected;

$C_{m\_obj}$: objective torque to be delivered so as to fulfil the request of the driver, who acts upon the accelerator pedal; and

$C_{obj}$: objective drive torque delivered by the reversible electrical machine (14) to the drive wheels in the instant in which a request for an increase in the torque (C) on the part of the driver, who acts upon the accelerator pedal, is detected.

**Patentansprüche**

1. Verfahren zur Steuerung eines Hybridfahrzeugs, das mit einem Verbrennungsmotor (2), einem servounterstützten Getriebe (1) und einer umschaltbaren elektrischen Maschine (14), die geeignet ist, ein zu den Antriebsrädern zu übertragendes Drehmoment (C) zu erzeugen, ausgestattet ist, wobei die umschaltbare elektrische Maschine (14) an ein für das Speichern von elektrischer Energie gestaltetes Speichersystem (16) angeschlossen ist; das Verfahren beinhaltet folgende Schritte:

Erkennen des Eintretens der Bedingung, bei der das Hybridfahrzeug auf einer geneigten Straßenoberfläche still steht;

Berechnen eines Zielantriebsdrehmoments (Cobj), das zu den Antriebsrädern geliefert werden muss, um das Hybridfahrzeug auf der geneigten Straßenoberfläche still zu halten;

Ermitteln des Ladezustands des Speichersystems (16); und Steuern der umschaltbaren elektrischen Maschine (14), um das Zielantriebsdrehmoment (Cobj) zu den Antriebsrädern zu liefern, das benötigt wird, um das Hybridfahrzeug nur in dem Fall auf der geneigten Straßenoberfläche still zu halten, dass der Ladezustand des Speichersystems (16) ausreicht, um das Zielantriebsdrehmoment (Cobj), das benötigt wird, um das Hybridfahrzeug auf der geneigten Straßenoberfläche still zu halten, zu liefern; und

das Verfahren ist **dadurch gekennzeichnet, dass** es ferner den Schritt beinhaltet, bei welchem dem Fahrer die Bedingung, bei der der Ladezustand des Speichersystems (16) nicht ausreicht, um das Zielantriebsdrehmoment (Cobj), das benötigt wird, um das Hybridfahrzeug auf der geneigten Straßenoberfläche still zu halten, zu liefern, signalisiert wird, sodass der Fahrer eingreifen kann, um eine unerwünschte Rückwärts- oder Vorwärtsbewegung des Hybridfahrzeugs auf der geneigten Straßenoberfläche zu vermeiden.

2. Verfahren nach Anspruch 1, wobei das Hybridfahrzeug mit einem Hybridfahrzeug-Neigungs- und/oder -Bewegungssensor ausgestattet ist, der geeignet ist, um festzustellen, ob das Hybridfahrzeug auf einer geneigten Straßenoberfläche steht, und wobei der Schritt des Erkennens des Eintretens der Bedingung, bei der das Hybridfahrzeug auf einer geneigten Straßenoberfläche still steht, das Erkennen des gleichzeitigen Eintretens folgender Bedingungen einschließt:

- der Hybridfahrzeug-Neigungs- und/oder

- Bewegungssensor stellt fest, dass das Hybridfahrzeug auf einer geneigten Straßenoberfläche steht; und

- der Fahrer betätigt das Bremspedal.

3. Verfahren nach einem der vorangegangenen Ansprüche, wobei der Schritt des Steuerns der umschaltbaren elektrischen Maschine (14), um das Zielantriebsdrehmoment (Cobj), das benötigt wird, um das Hybridfahrzeug auf der geneigten Straßenoberfläche still zu halten, zu den Antriebsrädern zu liefern, das Berechnen der elektrischen Energie, die benötigt wird, um der umschaltbaren elektrischen Maschine (14) zu erlauben, als Generator von elektrischer Energie zu arbeiten, nach folgender Formel einschließt:

$$E_{tot} = \Delta E(C_{obj}) + E_i \qquad [1]$$

$E_i$: von der umschaltbaren elektrischen Maschine (14) gelieferte elektrische Energie für den Betrieb der elektrischen Vorrichtungen des Hybridfahrzeugs in dem Moment, in dem das Hybridfahrzeug auf einer geneigten Straßenoberfläche still steht;
$\Delta E(C_{obj})$: von der umschaltbaren elektrischen Maschine (14) gelieferte elektrische Energie, um das Zielantriebsdrehmoment ($C_{obj}$) zu den Antriebsrädern in dem Moment zu gewährleisten, in dem das Hybridfahrzeug auf einer geneigten Straßenoberfläche still steht; und $E_{tot}$: gesamte elektrische Energie, die von der umschaltbaren elektrischen Maschine (14) in dem Moment abgerufen wird, in dem das Hybridfahrzeug auf einer geneigten Straßenoberfläche still steht.

4. Steuerungsverfahren nach einem der vorangegangenen Ansprüche und mit dem weiteren Schritt des Erkennens der Absicht des Fahrers, mit dem Hybridfahrzeug sich vorwärts zu bewegen, wenn der Fahrer das Bremspedal nicht mehr betätigt und durch Betätigen des Fahrpedals eine Erhöhung des zu den Antriebsrädern zu liefernden Drehmoments (C) wünscht.

5. Verfahren nach Anspruch 3 und 4 und mit dem weiteren Schritt des Berechnens der elektrischen Energie, die benötigt wird, um zu erlauben, dass die umschaltbare elektrische Maschine (14) als Generator von elektrischer Energie arbeitet, nach folgender Formel:

$$E = \Delta E(C_m) + E_{tot} \qquad [3]$$

$E_{tot}$: gesamte elektrische Energie, die von der umschaltbaren elektrischen Maschine (14) in dem Moment abgerufen wird, in dem das Hybridfahrzeug auf einer geneigten Straßenoberfläche still steht;
$\Delta E(\Delta C_m)$: zusätzliche, von der umschaltbaren elektrischen Maschine (14) gelieferte elektrische Energie, um ein zusätzliches Drehmoment ($\Delta C_m$) zu den Antriebsrädern in dem Moment zu gewährleisten, in dem ein Wunsch zum Erhöhen des Drehmoments (C) seitens des Fahrers, der das Fahrpedal betätigt, festgestellt wird; und
E: gesamte elektrische Energie, die von der umschaltbaren elektrischen Maschine (14) in dem Moment abgerufen wird, in dem ein Wunsch zum Erhöhen des Drehmoments (C) seitens des Fahrers, der das Fahrpedal betätigt, festgestellt wird.

6. Verfahren nach Anspruch 5, wobei das zusätzliche zu den Antriebsrädern zu liefernde Drehmoment ($\Delta C_m$) in dem Moment, in dem ein Wunsch zum Erhöhen des Drehmoments (C) seitens des Fahrers, der das Fahrpedal betätigt, festgestellt wird, nach folgender Formel berechnet wird:

$$\Delta C_m = C_{m\_obj} - C_{obj} \qquad [2]$$

$\Delta C_m$: zusätzliches Drehmoment, das ab dem Moment zu den Antriebsrädern geliefert werden muss, in dem ein Wunsch zum Erhöhen des Drehmoments (C) seitens des Fahrers, der das Fahrpedal betätigt, festgestellt wird;
$C_{m\_obj}$: Zieldrehmoment, das geliefert werden muss, um den Wunsch des Fahrers, der das Fahrpedal betätigt, zu erfüllen; und
$C_{obj}$: Zielantriebsdrehmoment, das von der umschaltbaren elektrischen Maschine (14) in dem Moment zu den Antriebsrädern geliefert werden muss, in dem ein Wunsch zum Erhöhen des Drehmoments (C) seitens des Fahrers, der das Fahrpedal betätigt, festgestellt wird.

**Revendications**

1. Procédé de commande d'un véhicule hybride pourvu d'un moteur à combustion interne (2), d'une transmission servoassistée (1) et d'une machine électrique réversible (14) appropriés pour générer un couple (C) à transmettre aux roues motrices, dans lequel la machine électrique réversible (14) est reliée à un système de stockage (16) conçu pour stocker de l'énergie électrique ;
le procédé comprend les étapes consistant à :

reconnaître l'apparition de la condition dans laquelle le véhicule hybride est immobile sur une surface de route en pente ;
calculer un couple d'entraînement objectif (Cobj) à délivrer aux roues motrices de manière à maintenir le véhicule hybride immobile sur la surface de route en pente ;
détecter l'état de charge du système de stockage (16) ; et
commander la machine électrique réversible (14) de manière à délivrer aux roues motrices le couple d'entraînement objectif (Cobj) nécessaire pour maintenir le véhicule hybride immobile sur la surface de route en pente uniquement dans le cas où l'état de charge du système de stockage (16) suffit pour délivrer le couple d'entraînement objectif (Cobj) nécessaire pour maintenir le véhicule hybride immobile sur la surface de route en pente ;

le procédé est **caractérisé en ce qu'**il comprend en outre l'étape consistant à signaler au conducteur la condition dans laquelle l'état de charge du système de stockage (16) ne suffit pas pour délivrer le couple d'entraînement objectif (Cobj) nécessaire pour maintenir le véhicule hybride immobile sur la surface de route en pente de telle sorte que le conducteur peut intervenir pour éviter un déplacement non souhaité vers l'arrière ou vers l'avant du véhicule hybride sur la surface de route en pente.

2. Procédé selon la revendication 1, dans lequel le véhicule hybride est pourvu d'un capteur de déplacement et/ou de pente de véhicule hybride, qui est approprié pour détecter si le véhicule hybride se trouve sur une surface de route en pente, et dans lequel l'étape de reconnaissance de l'apparition de la condition dans laquelle le véhicule hybride se trouve immobile sur une surface de route en pente implique la reconnaissance de l'apparition simultanée des conditions suivantes :

- le capteur de déplacement et/ou de pente de véhicule hybride détecte que le véhicule hybride se trouve sur une surface de route immobile ; et
- le conducteur agit sur la pédale de frein.

3. Procédé selon l'une quelconque des revendications précédentes, dans lequel l'étape de commande de la machine électrique réversible (14) de manière à délivrer aux roues motrices le couple d'entraînement objectif (Cobj) nécessaire pour maintenir le véhicule hybride immobile sur la surface de route en pente implique le calcul de l'énergie électrique nécessaire pour permettre à la machine électrique réversible (14) de servir de générateur d'énergie électrique selon la formule suivante :

$$E_{tot} = \Delta E(C_{obj}) + E_i \qquad [1]$$

$E_i$ : énergie électrique délivrée par la machine électrique réversible (14) pour le fonctionnement des dispositifs électriques du véhicule hybride à l'instant où le véhicule hybride se trouve immobile sur une surface de route en pente ;
$\Delta E(C_{obj})$ : énergie électrique délivrée par la machine électrique réversible (14) pour garantir le couple d'entraînement objectif (Cobj) aux roues motrices à l'instant où le véhicule hybride se trouve immobile sur une surface de route en pente ; et
$E_{tot}$ : énergie électrique totale demandée à la machine électrique réversible (14) à l'instant où le véhicule hybride se trouve immobile sur une surface de route en pente.

4. Procédé de commande selon l'une quelconque des revendications précédentes et comprenant l'étape supplémentaire consistant à reconnaître l'intention du conducteur à se déplacer vers l'avant avec le véhicule hybride, quand le conducteur n'agit plus sur la pédale de frein et demande une augmentation du couple (C) à délivrer aux roues motrices en agissant sur la pédale d'accélération.

5. Procédé selon la revendication 3 et 4 et comprenant l'étape supplémentaire consistant à calculer l'énergie électrique nécessaire pour permettre à la machine électrique réversible (14) de servir de générateur d'énergie électrique selon la formule suivante :

$$E = \Delta E(C_m) + E_{tot} \qquad [3]$$

$E_{tot}$ : énergie électrique totale demandée à la machine électrique réversible (14) à l'instant où le véhicule hybride se trouve immobile sur une surface de route en pente ;
$\Delta E(C_m)$ : énergie électrique supplémentaire délivrée par la machine électrique réversible (14) pour garantir un couple supplémentaire ($\Delta C_m$) aux roues motrices à l'instant où une demande d'une augmentation du couple (C) de la part du conducteur, qui agit sur la pédale d'accélération, est détectée ; et
$E$ : énergie électrique totale demandée à la machine électrique réversible (14) à l'instant où une demande d'une augmentation du couple (C) de la part du conducteur, qui agit sur la pédale d'accélération, est détectée.

6. Procédé selon la revendication 5, dans lequel le couple supplémentaire ($\Delta C_m$) à délivrer aux roues motrices à l'instant où une demande d'une augmentation du couple (C) de la part du conducteur, qui agit sur la pédale d'accélération, est détectée est calculé par le biais de la formule suivante :

$$\Delta C_m = C_{m\_obj} - C_{obj} \qquad [2]$$

$\Delta C_m$ : couple supplémentaire à délivrer aux roues motrices à partir de l'instant où une demande d'une augmentation du couple (C) de la part du conducteur, qui agit sur la pédale d'accélération, est détectée ;

$C_{m\_obj}$ : couple objectif à délivrer de manière à réaliser la demande du conducteur, qui agit sur la pédale d'accélération ; et

$C_{obj}$ : couple d'entraînement objectif délivré par la machine électrique réversible (14) aux roues motrices à l'instant où une demande d'une augmentation du couple (C) de la part du conducteur, qui agit sur la pédale d'accélération, est détectée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009062061 A1